# EUROPEAN PATENT APPLICATION

(11) **EP 4 391 643 A1**
(43) Date of publication of application: **26.06.2024**
(21) Application number: 21953653.9
(22) Date of filing: 16.08.2021
(51) Int. Cl.: H04W 36/00, H04W 52/02

(54) **CELL SWITCH-OFF METHOD, TERMINAL DEVICE, NETWORK DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Ipside
(86) International application number: PCT/CN2021/112804
(87) International publication number: WO 2023/019399

(57) **Abstract**

A cell switch-off method, a terminal device, a network device, and a storage medium, used for reducing the signaling overhead of switching off a first cell, such that the network device achieves fast energy saving. The method comprises: a terminal device receives an indication message sent by a network device, the indication message being used for indicating that the network device will close a first cell.

## Description

### TECHNICAL FIELD

The present disclosure relates to the field of communication, and in particular to a method of shutting down a cell, a terminal device, a network device, and a storage medium.

### BACKGROUND

In a current New Radio (NR) system, a base station performs, by considering an amount of service of a terminal, carrier aggregation (CA)/dual connectivity (DC) configuration on user equipment (UE). That is, when the amount of service of the terminal is large, a secondary cell (SCell) is configured for the UE, or the DC is initiated. Usually, different UEs are connected to different cells (i.e., different UEs are configured with different primary cells (PCell)). In addition, since different UEs have different demands in the amount of service or different cells may have different channel qualities, a network may configure different SCells for different UEs. From the perspective of the base station, since the base station needs to provide service for a large number of UEs, the base station may need to initiate a plurality of component carriers (CCs) at the same time to transmit and receive data. By initiating more CCs for transmitting and receiving data, a higher system capacity is provided, and a transmission efficiency is improved, however, the base station may not save energy. If the base station reduces a frequency range for transmitting and receiving data, a transceiver channel may be reduced accordingly, such that power consumption of the base station may be reduced. However, in order to enable the terminal and the network to operate consistently, the base station needs to notify each affected UE one by one. That is, when the base station decides to shut down a certain CC, any UE that has established a radio resource control (RRC) connection within the certain cell needs to be notified one by one to switch to connect to another cell. Any UE that takes the certain cell as a primary secondary cell (PSCell) needs to be notified one by one to change the PSCell. Any UE that takes the certain cell as the SCell needs to be notified one by one to delete the SCell.

In an aspect, the notification may bring a large signaling overhead. In another aspect, due to limitation in resources of a physical downlink control channel (PDCCH), reconfiguring resources for all affected UEs may not be completed in a short period of time. Therefore, a large latency may be caused, a fast energy saving of the base station may not be achieved.

### SUMMARY OF THE DISCLOSURE

The present disclosure provides a method of shutting down a cell, a terminal device, a network device, and a storage medium. According to the present disclosure, a signaling overhead for shutting down a first cell is reduced, allowing the network device to rapidly saving energy.

In a first aspect, the present disclosure provides a method of shutting down a cell, including: receiving, by a terminal device, an indication message sent from a network device, wherein the indication message is configured to indicate that the network device will shut down a first cell.

In a second aspect, the present disclosure provides a method of shutting down a cell, including: sending, by a network device, an indication message to a terminal device, wherein the indication message is configured to indicate that the network device will shut down a first cell.

In a third aspect, the present disclosure provides a terminal device, including:
a transceiving module, configured to receive an indication message sent from a network device, wherein the indication message is configured to indicate that the network device will shut down a first cell.

In a fourth aspect, the present disclosure provides a network device, including:
a transceiving module, configured to send an indication message to a terminal device, wherein the indication message is configured to indicate that the network device will shut down a first cell.

In another aspect, the present disclosure provides a terminal device, including: a memory, storing executable program codes; and a transceiver, coupled to the memory. The transceiver is configured to perform the method according to the first aspect.

In another aspect, the present disclosure provides a network device, including: a memory, storing executable program codes; and a transceiver, coupled to the memory. The transceiver is configured to perform the method according to the second aspect.

In another aspect, the present disclosure provides a computer-readable storage medium, including instructions, wherein the instructions are configured to, when being run on a computer, enable the computer to perform the method according to the first aspect or the second aspect.

In another aspect, the present disclosure provides a chip, coupled to the memory of the terminal device, enabling the chip to invoke, when being run, the program codes in the memory to cause the terminal device to perform the method according to the first aspect or the second aspect.

According to the present disclosure, following technical effects are achieved.

In the present disclosure, the terminal device receives an indication message sent by the network device, the indication message is configured to indicate that the network device will shut down the first cell. That is, by receiving the indication message sent by the network device, the terminal device may reduce the signaling overhead for shutting down the first cell, enabling the network device to achieve rapid energy saving.

### BRIEF DESCRIPTION OF THE DRAWINGS

FIG. 1A is a schematic view of a network deployment and a network architecture in 4G and 5G dual connectivity.
FIG. 1B is a schematic view of a scenario 3A of EN-DC.
FIG. 1C is a schematic view of a scenario 3A of EN-DC.
FIG. 1D is a schematic view of a switching process based on a trigger condition.
FIG. 2 is an architecture diagram of a communication system applied in an embodiment of the present disclosure.
FIG. 3 is a flow chart of a method of shutting down a cell according to an embodiment of the present disclosure.
FIG. 4 is a schematic view of a terminal device taking the first cell as the PCell according to an embodiment of the present disclosure.
FIG. 5 is a flow chart of a method shutting down a cell according to an embodiment of the present disclosure.
FIG. 6 is a schematic view of a terminal device taking the first cell as the PSCell according to an embodiment of the present disclosure.
FIG. 7 is a flow chart of a method shutting down a cell according to an embodiment of the present disclosure.
FIG. 8 is a schematic view of a terminal device taking the first cell as the SCell according to an embodiment of the present disclosure.
FIG. 9 is a schematic view of a terminal device according to an embodiment of the present disclosure.
FIG. 10 is a schematic view of a network device according to an embodiment of the present disclosure.
FIG. 11 is a schematic view of the terminal device according to another embodiment of the present disclosure.
FIG. 12 is a schematic view of a network device according to another embodiment of the present disclosure.

### DETAILED DESCRIPTION

Technical solutions in embodiments of the present disclosure will be described below by referring to the accompanying drawings in the embodiments of the present disclosure. Apparently, the described embodiments are only a part of but not all of the embodiments of the present disclosure. All other embodiments, which are obtained by the any ordinary skilled person in the art based on the embodiments in the present disclosure without making creative work, shall fall within the scope of the present disclosure.

Currently, as people are seeking a high rate, less latency, high-speed mobility, a high energy efficiency, and diversity and complexity of services in the future life, the third-generation partnership project (3GPP) international standard organization has started developing the 5G communication. The 5G communication is mainly applied to the following scenarios: an enhanced mobile ultra broadband (eMBB), ultra reliable low latency communications (URLLC), and massive machine type communication (mMTC).

The New Radio (NR) may be deployed independently. In a 5G network scenario, a new radio resource control (RRC) state is defined, i.e., an RRC_INACTIVE (RRC inactive) state, in order to reduce air-port signaling, to restore wireless connectivity quickly, and to quickly recover data services. The RRC inactive state is different from an RRC_IDLE (RRC idle) state and an RRC_ACTIVE (RRC active) state.

For the RRC_IDLE state: Mobility refers to cell reselection based on UE cell selection. Paging is initiated by a core network (CN), and a paging region is configured by the CN. The base station does not have a UE access stratum (AS) context. No RRC connection exists.

For the RRC_CONNECTED state: The RRC connection exists. Each of the base station and the UE has the UE AS context. The network acknowledges a location of the UE at a specific cell level. The mobility is network-controlled mobility. Unicast data can be transmitted between the UE and the base station.

For the RRC_INACTIVE state: The mobility refers to cell reselection based on UE cell selection. Connection between CN-NR exists. The UE AS context exists on a certain base station. Paging is triggered by a radio access network (RAN). A RAN-based paging region is managed by the RAN. The network acknowledges that the location of the UE is based on the RAN paging region level.

### 1. NR CA Technology

In order to provide a greater data transmission rate and to improve user experience, a system bandwidth in the 5G NR is increased, compared to the system bandwidth in the 4G. In the 5G NR, for a frequency band below 6GHz, a maximum bandwidth supported by a single carrier is 100MHz; and for a frequency band above 6GHz, a maximum bandwidth supported by a single carrier is 400MHz.

Similar to the long term evolution (LTE) system, the 5G NR also supports carrier aggregation (CA). For the CA, resources on a plurality of component carriers (CC) are jointly scheduled and used to enable the system to support a greater bandwidth, such that a higher system peak rate is achieved. According to continuity of the aggregated carriers in a spectrum, the CA includes continuous carrier aggregation and discontinuous carrier aggregation. According to whether the aggregated carriers are located on a same frequency band, the CA includes intra-band carrier aggregation and inter-band carrier aggregation.

For a terminal that supports the CA, in addition to having a primary secondary cell group cell (PCell) of a secondary cell group (SCG), the network may further configure one or more secondary cells (SCell) for the terminal. The primary cell (PCell) provides RRC signaling connectivity, non-access stratum (NAS) function, security, and so on. The SCell provides only additional radio resources. The PCell and the SCell are referred to as service cells. The network performs RRC reconfiguration to manage the SCell for the UE, including including SCell addition, SCell modification, and SCell deletion.

The SCell has an active state and an inactive state. Only when the SCell is in the active state, the terminal may transmit and receive data on the SCell. An initial state of a configured SCell is the inactive state. The SCell may be activated or de-activated in the following two manners:
(1) activating/de-activating the SCell indicated based on a SCell activation/de-activation medium access control control element (MAC CE); and
(2) de-activating the SCell based on a timer being timed-out.

The terminal may transmit and receive data on the PCell and the activated one or more SCells simultaneously, such that a data transmission rate is improved.

### 2. NR Dual Connectivity (DC) Technology

In early deployment of NR, it is difficult to obtain a complete NR coverage. Therefore, a typical network coverage is a wide-range LTE coverage and an NR isolated-island coverage. A large number of LTE deployments are below 6GHz, and the number of available frequency spectrums for the 6GHz in the 5G is very limited. Therefore, applications of the frequency spectrums above 6GHz must be studied for the NR, however, high-frequency band coverage is limited, and the signal is attenuating rapidly. In addition, in order to protect the mobile operator's investment in the LTE, an operation mode of tight interworking between the LTE and the NR is proposed.

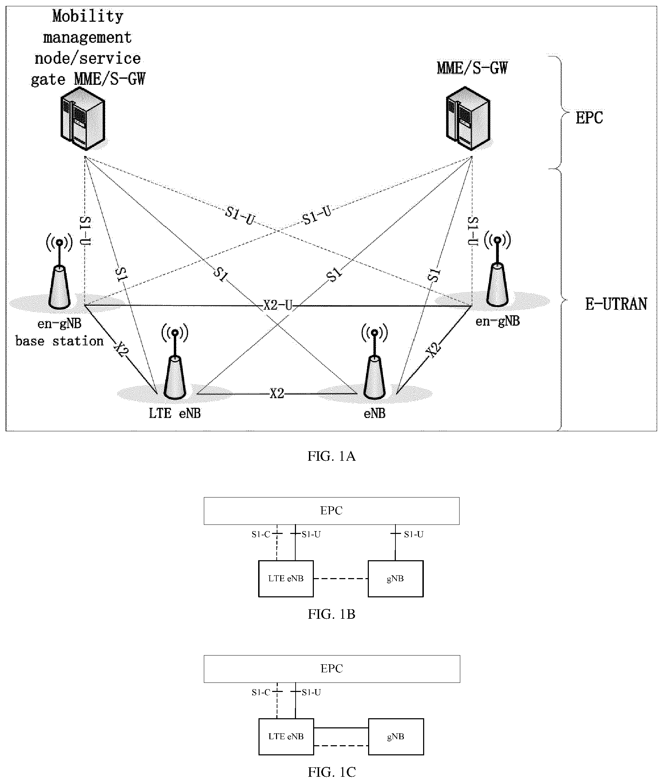

In order to achieve the 5G network deployment and commercial application as soon as possible, the 3GPP firstly completed the first 5G version by the end of December 2017, i.e., the LTE-NR dual connectivity (EN-DC), which is 4G and 5G dual connectivity. In this case, the LTE serves as a master node (MN) and a SN serves as a secondary node. FIG. 1A shows a schematic view of the network deployment and a networking architecture in the 4G and 5G dual connectivity.

As shown in FIG. 1B, a schematic view of a scenario of 3A of the EN-DC is shown. As shown in FIG. 1C, a schematic view of the scenario 3 of the EN-DC is shown.

The MN has a main RRC control function and a control plane to the CN. The SN may be configured with an auxiliary signaling, such as signaling radio bearer 3 (SRB3), which mainly provides a data transmission function. A primary cell of the MN is the PCell. A primary cell of the SN serve as the PSCell (primary secondary cell).

In a later stage of R15, other DC modes may be supported, i.e. NE-DC (NR-E-UTRA Dual Connectivity, New Radio-Evolved-UMTS Terrestrial Radio Access-Dual Connectivity, 5G with Evolved Universal Mobile Telecommunications System (UMTS)), 5GC-EN-DC (5G-Core E-UTRA-NR Dual Connectivity), NR DC (NR-NR Dual Connectivity). For the EN-DC, the core network to which an access network connects is an evolved packet core (EPC), and the core network to which the other DC modes connect is a 5G core network (5GC).

### 3. Conditional Handover Based On Trigger Condition

For the problem of frequent handover and easy failure of the handover in high-speed mobile scenarios and high-frequency deployment scenarios, 3GPP introduced a conditional handover based on a trigger condition in Rel-16 for the LTE and the NR systems. The basic principle is as follows. The base station configures a target cell to the UE in advance and includes a condition for triggering the UE to perform handover in a handover command (HO command). In response to the UE determining, based on the condition configured by the network, that the condition related to the target cell is triggered, the UE handovers (i.e., triggering a random access process is triggered and a handover completion message is sent) to the target cell based on the HO command that is configured in advance. In this way, the problem that the UE, due to moving at a high speed into a region having poor coverage, cannot send a measurement report or receive the HO command in time may be avoided.

For CHO, the network may configure a plurality of candidate target cells in the HO command and configures a CHO execution condition for each candidate target cell respectively. The CHO execution condition for each candidate target cell may contain one or two trigger events. In the Rel-16, an A3 event and an A5 event may serve as the CHO trigger events. The Rel-17 non-terrestrial network (NTN) has agreed that an A4 event may serve as the CHO trigger event. The UE determines which target cell to access based on the configured CHO execution condition.

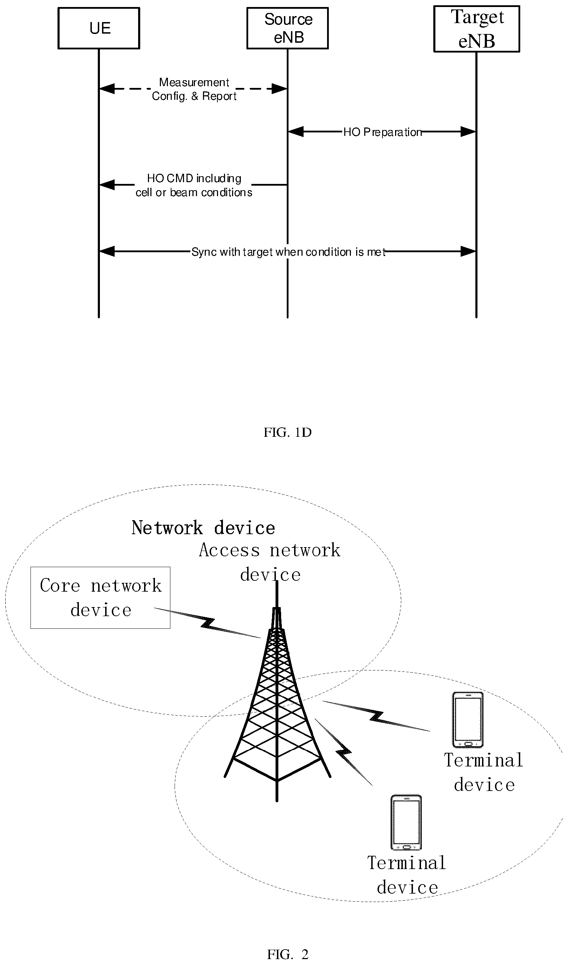

Currently, measurement events supported in the NR include the following:
For an A1 event, signal quality of a serving cell is greater than a threshold.
For an A2 event, signal quality of a serving cell is less than a threshold.
For an A3 event, signal quality of a neighbouring cell is higher than signal quality of a special cell (SpCell), and a signal quality difference is greater than a threshold.
For an A4 event, signal quality of the neighbouring cell is greater than a threshold.
For an A5 event, signal quality of the SpCell is less than a threshold 1, andthe signal quality of the neighbouring cell is greater than a threshold 2.
For an A6 event, signal quality of the neighbouring cell is higher than signal quality of a SCell, and a signal quality difference is greater than a threshold.
For a B1 event, signal quality of a neighbouring SpCell is greater than a threshold.
For a B2 event, signal quality of the PCell is less than a threshold 1, and signal quality of the neighbouring SpCell is greater than a threshold 2.
The sPCell = PCell + PSCell. FIG. 1D shows a schematic view of a handover process triggered based on a condition.

### 4. Conditional PSCell Change (CPC) Triggered Based On Condition

For the problem of the PSCell being changed frequently in high-speed mobile scenarios and high-frequency deployment scenarios, the 3GPP introduced a process of CPC for the LTE and NR systems in Rel-16. The basic principle is as follows. The SN configures the target cell to the UE in advance and includes a condition for triggering the UE to change the PSCell. The UE performs evaluation based on the condition configured by the network. When the configured condition is met, the UE initiates the PSell change. In this way, the problem that the UE, due to moving at a high speed into a region having poor coverage, cannot send a measurement report or receive a PSell-change command in time may be avoided.

Similar to the CHO, for the CPC, the network may configure a plurality of candidate target cells for the UE and configure a CPC execution condition for each candidate target cell respectively. The CPC execution condition for each candidate target cell includes one or two trigger events. In the Rel-16, the A3 event and the A5 event may serve as the CPC trigger events. The UE determines which target cell to access based on the configured CPC execution condition.

In the current NR system, the base station considers the amount of service of the terminal to determine whether to shut down carrier aggregation (CA)/dual connectivity (DC) for the UE. That is, when the amount of service of the terminal is large, the SCell is configured for the UE, or the DC is initiated. Usually, different UEs are connected to different cells (i.e., different UEs are connected to different PCells). In addition, since different UEs have different demands in the amount of service or different cells may have different channel qualities, the network may configure different SCells for different UEs. From the perspective of the base station, since the base station needs to provide service for a large number of UEs, the base station may need to initiate a plurality of CCs at the same time to transmit and receive data. By initiating more CCs for transmitting and receiving data, a higher system capacity is provided, and a transmission efficiency is improved, however, the base station may not save energy. If the base station reduces the frequency range for transmitting and receiving data, a transceiver channel may be reduced accordingly, such that power consumption of the base station may be reduced. However, in order to enable the terminal and the network to operate consistently, the base station needs to notify each affected UE one by one. That is, when the base station decides to shut down a certain CC, any UE that has established the RRC connection within the certain cell needs to be notified one by one to switch to connect to another cell. Any UE that takes the certain cell as a primary secondary cell (PSCell) needs to be notified one by one to change the PSCell. Any UE that takes the certain cell as the SCell needs to be notified one by one to delete the SCell. In an aspect, the notification may bring a large signaling overhead. In another aspect, due to limitation in resources of a physical downlink control channel (PDCCH), reconfiguring resources for all affected UEs may not be completed in a short period of time. Therefore, a large latency may be caused, a fast energy saving of the base station may not be achieved.

Technical solutions of embodiments of the present disclosure may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, and a new radio (NR) system, an evolution of the NR system, a LTE-based access to unlicensed spectrum (LTE-U) system, a NR-based access to unlicensed spectrum (NR-U) system, a non-terrestrial network (NTN) system, a universal mobile telecommunication system (UMTS), a wireless local region network (WLAN), and a Wireless Fidelity (WiFi), a 5th-Generation (5G) system, or other communication systems.

Typically, conventional communication systems support a limited number of connections and the connections may be achieved easily. However, as communication technology develops, the mobile communication system may support not only the conventional communication, but also, for example, device to device (D2D) communication, machine to machine (M2M) communication, machine type communication (MTC), vehicle to vehicle (V2V) communication, or vehicle to everything (V2X) communication, and so on. Embodiments of the present disclosure may also be applied to the above systems.

In some embodiments, the communication system in the embodiments of the present disclosure may be applied in a carrier aggregation (CA) scenario, or in a dual connectivity (DC) scenario, or in a standalone (SA) deployment scenario.

In some embodiments, the communication system in the embodiments of the present disclosure may be applied to an unauthorized spectrum. The unauthorised spectrum may be referred to as a shared spectrum. Alternatively, the communication system in the embodiments of the present disclosure may be applied to an authorized spectrum. The authorized spectrum may be referred to as an unshared spectrum.

Embodiments of the present disclosure are described by referring to a network device and a terminal device.

The terminal device may also be referred to as a user equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus, and so on.

The terminal device may be a station (ST) in the WLAN or may be a cellular phone, a cordless telephone, a session initiation protocol (SIP) telephone, a wireless local loop (WLL) station, a personal digital assistant (PDA) device, a handheld device having wireless communication capabilities, a computing device or other processing devices connected to a wireless modem, a vehicle-mounted device, a wearable device, a terminal device in a next-generation communication system such as in a NG network, or a terminal device in a future evolved public land mobile network (PLMN) network.

In the embodiments of the present disclosure, the terminal device may be deployed on land, including indoors or outdoors, handheld, wearable, or vehicle-mounted; on water (such as in ships, and so on); and in the air (such as on an aircraft, balloons, satellites, and so on).

In embodiments of the present disclosure, the terminal device may be a mobile phone, a tablet computer, a computer having a wireless transceiver function, a virtual reality (VR) terminal device, an augmented reality (AR) terminal device, a wireless terminal device in an industrial control, a wireless terminal device for self-driving, wireless terminal device for remote medical, a wireless terminal device in a smart grid, a wireless terminal device for transport safety, a wireless terminal device in a smart city or a smart home.

As an example but not a limitation, in embodiments of the present disclosure, the terminal device may also be a wearable device. The wearable device, which may also be referred to as a wearable smart device, is a general term for applying wearable technologies to intelligently design and develop devices that can be worn for everyday, such as glasses, gloves, watches, clothes and shoes. The wearable device is a portable device that is worn directly on a body or integrated into the user's clothes or accessories. The wearable device is not only a hardware device but can achieve powerful functions through software support, data interaction, and cloud interaction. Broadly speaking, the wearable smart device includes a full-featured and large-sized device that does not rely on a smart phone to achieve complete or partial functionality, such as a smart watch or smart glasses. The wearable smart device includes smart bracelets and smart jewellery that can monitor physical signs, the smart bracelets and smart jewellery focus on a certain type of application functionality and need to be used in combination with other devices such as the smart phone.

In embodiments of the present disclosure, the network device may be a device for communicating with a mobile device.

The network device may be an access point (AP) in the WLAN, a base transceiver station (BTS) in the GSM or the CDMA, a base station (NodeB, NB) in the WCDMA, and an evolutional base station (eNode B, eNB) in the LTE, or a relay station or an access point, or a vehicle-mounted device, a wearable device, and a network device in the NR network (gNB) or a network device in the future evolved PLMN network or a network device in the NTN network.

As an example but not limitation, in embodiments of the present disclosure, the network device may be mobile. For example, the network device may be a mobile device. In some embodiments, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, and so on. In some embodiments, the network device may be a base station located on land, on water, and so on.

In embodiments of the present disclosure, the network device may provide a service for a cell. The terminal device communicates with the network device through a transmission resource (such as a frequency domain resource or a spectrum resource) used by the cell. The cell may be a cell corresponding to the network device (such as a base station). The cell may belong to a macro base station or may belong to a base station corresponding to a small cell. The small cell may include: a Metro cell, a Micro cell, a Pico cell, a Femto cell, and so on. These small cells each has a small coverage region and a low transmission power, and therefore, they are suitable for providing a high-speed data transmission service.

FIG. 2 is an architecture diagram of a communication system applied in an embodiment of the present disclosure. The communication system may include a network device, and the network device may be a terminal device that communicates with the terminal device (or a communication terminal, a terminal). The network device may provide communication coverage for a particular geographical region and may communicate with any terminal device located within the coverage region. FIG. 2 exemplarily illustrates one network device and two terminal devices. In some embodiments, the communication system may include a plurality of network devices, and each of the plurality of network devices may include other numbers of terminal devices within a respective coverage region. The present disclosure does not limit the number of terminal devices. In some embodiments, the communication system may also include other network entities such as a network controller, a mobile management entity, which will not be limited herein.

The network device may include an access network device and core network device. That is, the wireless communication system further includes a plurality of core networks communicating with the access network device. The access network device may be an evolutionary base station (evolutional node B, eNodeB) in the LTE system, in a next generation (mobile communication system) (next radio, NR) system, or in an authorized auxiliary access long-term evolution (LAA-LTE) system; a macro base station, a micro base station (also known as "small base station"), a pico base station, an access point (AP), a transmission point (TP), or a new generation Node B (gNodeB).

It should be understood that the device in the network/system in the embodiments of the present disclosure having communication functions may be referred to as a communication device. Taking the communication system illustrated in FIG. 2 as an example, the communication device may include a network device and a terminal device having communication functions. The network device and the terminal device may be devices described in the embodiments of the present disclosure, which will not be repeated herein. The communication device may further include other devices in the communication system, such as a network controller, a mobility management entity, and other network entities, which will not be limited herein.

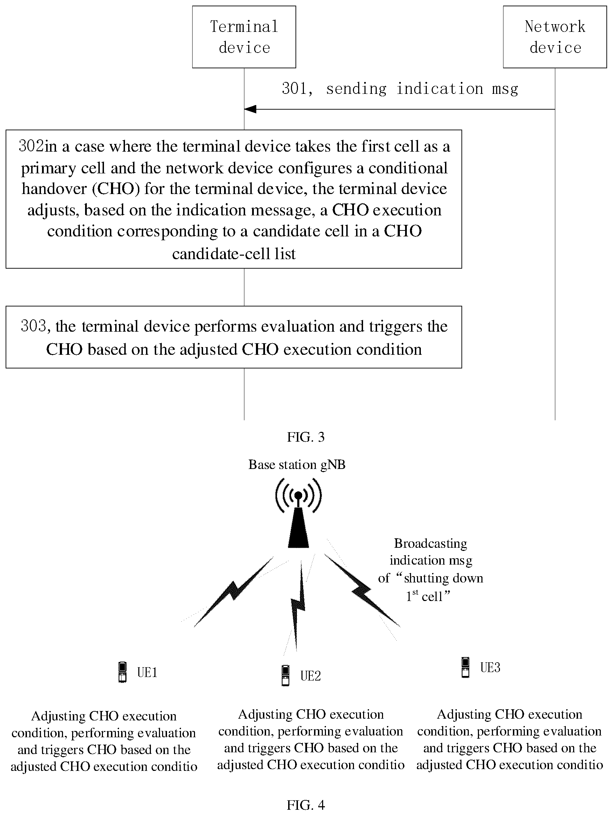

Technical solutions of the present disclosure will be further described in the following by describing embodiments. As shown in FIG. 3, FIG. 3 is a flow chart of a method of shutting down a cell according to an embodiment of the present disclosure. The method includes the following operations.

In an operation 301, the network device sends an indication message to the terminal device. The indication message is configured to indicate that the network device will shut down a first cell.

The terminal device receives the indication message sent from the network device.

In some embodiments, the network device broadcasts the indication message.

In some embodiments, the indication message further comprises: a frequency point corresponding to the first cell and a physical cell identifier (PCI) of the first cell.

In some embodiments, the indication message further comprises: a time point at which the network device shuts down the first cell.

In some embodiments, the time point at which the network device shuts down the first cell includes at least one of: a universal time coordinated (UTC) time and a system frame number (SFN) received by the terminal device.

In some embodiments, the indication message is carried in a master information block (MIB) or a system information block (SIB).

Exemplarily, the UE receives a system information (such as MIB/SIB 1/other SIB) sent by the base station. The system information includes the indication message, which indicates that the base station is going to shut down the first cell. Whether to shut down a certain cell is determined based on an energy-saving strategy of the network device and will not be limited herein.

Information related to the base station shutting down the first cell may include the following:
(1) the frequency point corresponding to the first cell and the PCI of the first cell; and
(2) time information for the base station to shut down the first cell. The time information may be: the UTC time and/or the SFC received by the terminal device.

In an operation 302, in a case where the terminal device takes the first cell as a primary cell and the network device configures a conditional handover (CHO) for the terminal device, the terminal device adjusts, based on the indication message, a CHO execution condition corresponding to a candidate cell in a CHO candidate-cell list.

In some embodiments, the network device sends first configuration information to the terminal device. The terminal device receives the first configuration information sent by the network device. The first configuration information includes the CHO candidate-cell list and the CHO execution condition corresponding to each candidate cell in the CHO candidate-cell list. Exemplarily, FIG. 4 shows a schematic view of the terminal device taking the first cell as the PCell according to an embodiment of the present disclosure.

In some embodiments, different CHO candidate cells may correspond to different CHO execution conditions or a same CHO execution condition.

Exemplarily, for a UE in the connected state, when the UE takes the first cell as the PCell and the network device configures the CHO candidate-cell list for the UE, the UE may adjust the CHO execution condition corresponding to each candidate cell in the CHO candidate-cell list.

In some embodiments, 1. the CHO candidate-cell list includes a first CHO candidate cell. A CHO execution condition corresponding to the first CHO candidate cell includes a CHO event A3. The operation of the terminal device adjusting the CHO execution condition corresponding to the candidate cell in the CHO candidate-cell list based on the indication message, may include following. The terminal device adjusts, based on the indication message, the CHO execution condition corresponding to the first CHO candidate cell.

Further, in some embodiments, the operation of the terminal device adjusting the CHO execution condition corresponding to the first CHO candidate cell based on the indication message, may include at least one of the following.
(1) The terminal device reduces, based on the indication message, a3-Offset corresponding to the CHO event A3 to reach a first threshold value. The first threshold value is a preset value or a value configured by the network device.
(2) The terminal device reduces, based on the indication message, a channel quality measurement value of the primary cell to reach a first measurement value. The first measurement value is a preset value or a value configured by the network device.

In some embodiments, the channel quality measurement value may include at least one of: a measurement value of a reference signal received power (RSRP), a measurement value of reference signal received quality (RSRQ), a measurement value of a received signal strength indicator (RSSI), and a measurement value of a signal-to interference plus noise ratio (SINR). The SINR may include a reference signal-signal-to interference plus noise ratio (RS-SINR).

Exemplarily, when the CHO execution condition corresponding to the first CHO candidate cell includes the CHO event A3 (i.e., CondEvent A3), following method may be performed.

Method 1: The threshold a3-Offset (offset) of the CondEvent A3 is adjusted (lowered), based on the indication message, to reach the first threshold value. The first threshold value is a preset value or a value configured by the network device.

Method 2: The channel quality measurement value (such as RSRP, RSRQ, RS-SINR, and so on) of the PCell is adjusted (reduced), based on the indication message, to reach the first measurement value. The first measurement value is a preset value or a value configured by the network device.

2. The CHO candidate-cell list includes a second CHO candidate cell. The CHO execution condition corresponding to the second CHO candidate cell includes a CHO event A5. The operation of the terminal device adjusting, based on the indication message, the CHO execution condition corresponding to the candidate cell in the CHO candidate-cell list, may include the following. The terminal device adjusts, based on the indication message, the CHO execution condition corresponding to the second CHO candidate cell.

Further, in some embodiments, the operation of the terminal device adjusting, based on the indication message, the CHO execution condition corresponding to the second CHO candidate cell, may include at least one of the following.
(1) The terminal device reduces, based on the indication message, a5-Threshold1 of the CHO event A5 to reach a second threshold value. The second threshold value is a preset value or a value configured by the network device.
(2) The terminal device reduces, based on the indication message, the a5-Threshold2 of the CHO event A5 to reach a third threshold value. The third threshold value is a preset value or a value configured by the network device.
(3) The terminal device reduces, based on the indication message, the channel quality measurement value of the primary cell to reach a second measurement value. The second measurement value is a preset value or a value configured by the network device.
(4) The terminal device determines that the channel quality of the primary cell is always below the a5-Threshold1 of the CHO event A5.

Exemplarily, when the CHO execution condition of the second CHO candidate cell includes the CHO event A5 (i.e. CondEvent AS), following method may be performed.

Method 1: The threshold value a5-Threshold1 of CondEvent A5 is increased, based on the indication message, to reach the second threshold value. In some embodiments, the threshold value a5-Threshold2 of CondEvent A5 is adjusted (reduced) to reach the third threshold value. Each of the second threshold value and the third threshold value is a preset value or a value configured by the network device.

Method 2: The channel quality measurement value (such as RSRP, RSRQ, RS-SINR, and so on) of the PCell is adjusted (reduced), based on indication message, to reach the second measurement value. The second measurement value is a preset value or a value configured by the network device.

Method 3: The terminal device determines, based on indication message, that the condition "the channel quality of the PCell being below the threshold value a5-Threshold1" is always met. That is, the determination of whether the condition is met is not determined based on the measurement value or the threshold value.

3. The CHO candidate-cell list includes a third CHO candidate cell. The CHO execution condition corresponding to the third CHO candidate cell includes a CHO event A4. The operation of the terminal device adjusting, based on the indication message, the CHO execution condition corresponding to the candidate cell in the CHO candidate-cell list, may include the following. The terminal device adjusts the CHO execution condition corresponding to the third CHO candidate cell.

Further, in some embodiments, the operation of the terminal device adjusting, based on the indication message, the CHO execution condition corresponding to the third candidate cell, may include the following. The terminal device reduces, based on the indication message, a4-Threshold of the CHO event A4 to reach a fourth threshold value. The fourth threshold value is a preset value or a value configured by the network device.

Exemplarily, when the CHO execution condition of the third CHO candidate cell includes the CHO event A4 (i.e., CondEvent A4), following operations may be performed.

The threshold value a4-Threshold of the CondEvent A4 is adjusted (reduced), based on the indication message, to reach the fourth threshold value. The fourth threshold value is a preset value or a value configured by the network device.

It is to be understood that the first CHO candidate cell, the second CHO candidate cell, and the third CHO candidate cell in the above is illustrative only. In practice, the first CHO candidate cell, the second CHO candidate cell, and the third CHO candidate cell may be a same candidate cell or different candidate cells.

In an operation 303, the terminal device performs evaluation and triggers the CHO based on the adjusted CHO execution condition.

Exemplarily, the UE performs evaluation and triggers the CHO based on the adjusted CHO execution condition.

In the present embodiment, the terminal device receives the indication message sent by the network device. When the terminal device takes the first cell as the primary cell and the network device configures the CHO for the terminal device, the terminal device adjusts, based on the indication message, the CHO execution condition corresponding to each candidate cell in the CHO candidate-cell list. The terminal device performs evaluation and triggers the CHO based on the adjusted CHO execution condition. Based on the energy-saving strategy, the network device, in response to deciding to shut down the first cell, sends the indication message to the terminal device to indicate the terminal device that the network device will shut down the first cell. For the terminal device which has established the RRC connection in the first cell (i.e., the UE that takes the first cell as the PCell), when the network device configures the CHO for the terminal device, the terminal device adjusts the CHO execution condition, and performs evaluation and triggers the CHO based on the adjusted CHO execution condition. That is, the UE that has established the RRC connection in the first cell may handover to another cell more quickly. On the one hand, the signaling overhead is reduced; and on the other hand, a delay of the terminal device in performing the above processes is significantly shortened, such that the network device may save energies.

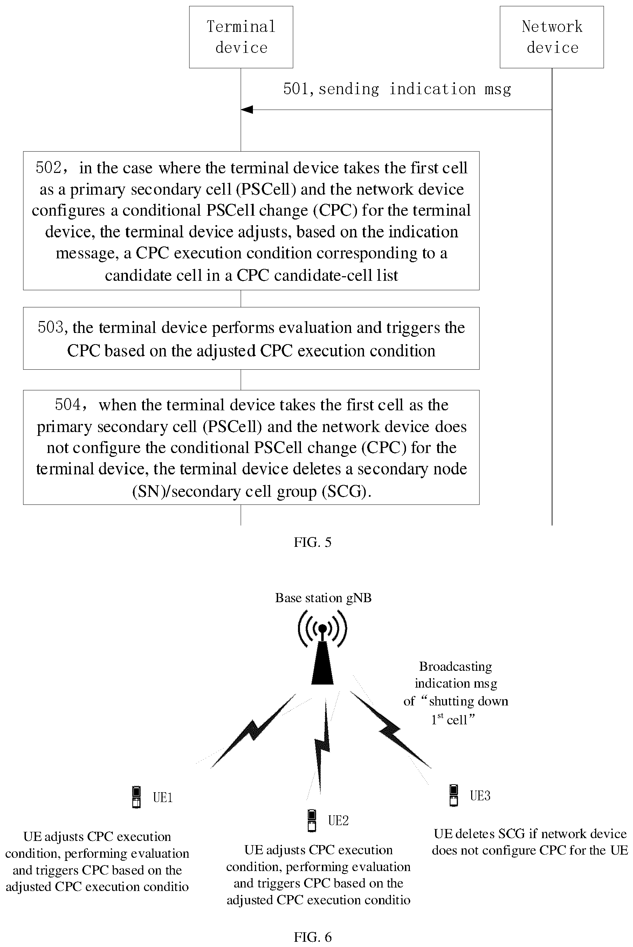

As shown in FIG. 5, FIG. 5 is a flow chart of a method shutting down a cell according to an embodiment of the present disclosure. The method includes the following.

In an operation 501, the network device sends the indication message to the terminal device. The indication message is configured to indicate that the network device will shut down the first cell.

The terminal device receives the indication message sent by the network device.

It should be noted that operation 501 is similar to the operation 301 in the embodiment described in FIG. 3 and will not be repeated here.

In an operation 502, in the case where the terminal device takes the first cell as a primary secondary cell (PSCell) and the network device configures a conditional PSCell change (CPC) for the terminal device, the terminal device adjusts, based on the indication message, a CPC execution condition corresponding to a candidate cell in a CPC candidate-cell list.

In some embodiments, the network device sends second configuration information to the terminal device. The terminal device receives the second configuration information sent by the network device. The second configuration information includes the CPC candidate-cell list and a CPC execution condition corresponding to each candidate cell in the CPC candidate-cell list. Exemplarily, FIG. 6 shows a schematic view of a terminal device taking the first cell as the PSCell according to an embodiment of the present disclosure.

In some embodiments, different CPC candidate cells correspond to different the CHO execution conditions or a same CHO execution condition.

Exemplarily, for the UE in the connected state, when the UE takes the first cell as the PSCell and the network device configures the CPC candidate-cell list for the UE, the UE may adjust the CPC execution condition corresponding to each candidate cell in the CPC candidate-cell list.

In some embodiments, 1. the CPC candidate-cell list include a first CPC candidate cell, and the CPC execution condition corresponding to the first CPC candidate cell includes a CPC event A3. The operation of the terminal device adjusting, based on the indication message, the CPC execution condition corresponding to the candidate cell in the CPC candidate-cell list, includes the following. The terminal device adjusts, based on the indication message, the CPC execution condition corresponding to the first CPC candidate cell.

Further, in some embodiments, the operation of the terminal device adjusting, based on the indication message, the CPC execution condition corresponding to the first CPC candidate cell, may include the following.

(1) The terminal device reduces, based on the indication message, a3-Offset corresponding to the CPC event A3 to reach a fifth threshold value. The fifth threshold value is a preset value or a value configured by the network device.

(2) The terminal device reduces, based on the indication message, a channel quality measurement value of the secondary cell to reach a third measurement value. The third measurement value is a preset value or a value configured by the network device.

In some embodiments, the channel quality measurement value may include at least one of: a measurement value of a reference signal received power (RSRP), a measurement value of reference signal received quality (RSRQ), a measurement value of a received signal strength indicator (RSSI), and a measurement value of a signal-to interference plus noise ratio (SINR). The SINR may include a reference signal-signal-to interference plus noise ratio (RS-SINR).

Exemplarily, when the CPC execution condition corresponding to the first CPC candidate cell includes the CPC event A3 (i.e., CondEvent A3), following method may be performed.

Method 1: The threshold a3-Offset (offset) of the CondEvent A3 is adjusted (lowered), based on the indication message, to reach the first threshold value. The first threshold value is a preset value or a value configured by the network device.

Method 2: The channel quality measurement value (such as RSRP, RSRQ, RS-SINR, and so on) of the PSCell is adjusted (reduced), based on the indication message, to reach the first measurement value. The first measurement value is a preset value or a value configured by the network device.

2. The CPC candidate-cell list includes a second CPC candidate cell. The CPC execution condition corresponding to the second CPC candidate cell includes a CPC event A5. The operation of the terminal device adjusting, based on the indication message, the CPC execution condition corresponding to the candidate cell in the CPC candidate-cell list, may include the following. The terminal device adjusts, based on the indication message, the CPC execution condition corresponding to the first CPC candidate cell.

Further, in some embodiments, the operation of the terminal device adjusting, based on the indication message, the CPC execution condition corresponding to the first CPC candidate cell, may include at least one of the following.
(1) The terminal device reduces, based on the indication message, a5-Threshold1 of the CPC event A5 to reach a sixth threshold value. The sixth threshold value is a preset value or a value configured by the network device.
(2) The terminal device reduces, based on the indication message, the a5-Threshold2 of the CPC event A5 to reach a seventh threshold value. The seventh threshold value is a preset value or a value configured by the network device.
(3) The terminal device reduces, based on the indication message, the channel quality measurement value of the primary secondary cell to reach a fourth measurement value. The fourth measurement value is a preset value or a value configured by the network device.
(4) The terminal device determines that the channel quality of the primary secondary cell is always below the a5-Threshold1 of the CPC event A5.

Exemplarily, when the CPC execution condition of the second CPC candidate cell includes the CPC event A5 (i.e. CondEvent A5), following method may be performed.

Method 1: The threshold value a5-Threshold1 of CondEvent A5 is adjusted (increased), based on the indication message, to reach the second threshold value. The second threshold value is a preset value or a value configured by the network device.

Method 2: The threshold value a5-Threshold2 of CondEvent A5 is adjusted (decreased), based on the indication message, to reach the third threshold value. Each of the second threshold value and the third threshold value is a preset value or a value configured by the network device.

Method 3: The channel quality measurement value (such as RSRP, RSRQ, RS-SINR, and so on) of the PSCell is adjusted (reduced), based on indication message, to reach the second measurement value. The second measurement value is a preset value or a value configured by the network device.

Method 4: The terminal device determines, based on indication message, that the condition "the channel quality of the PSCell being below the threshold value a5-Threshold1" is always met. That is, the determination of whether the condition is met is not determined based on the measurement value or the threshold value.

3. The CPC candidate-cell list includes a third CPC candidate cell. The CPC execution condition corresponding to the third CPC candidate cell includes a CPC event A4. The operation of the terminal device adjusting, based on the indication message, the CPC execution condition corresponding to the candidate cell in the CPC candidate-cell list, may include the following. The terminal device adjusts, based on the indication message, the CPC execution condition corresponding to the third CPC candidate cell.

Further, in some embodiments, the operation of the terminal device adjusting, based on the indication message, the CPC execution condition corresponding to the third CPC candidate cell, may include the following. The terminal device reduces, based on the indication message, a4-Threshold of the CPC event A4 to reach an eighth threshold value. The eighth threshold value is a preset value or a value configured by the network device.

Exemplarily, when the CPC execution condition of the third CPC candidate cell includes the CPC event A4 (i.e., CondEvent A4), following operations may be performed.

The threshold value a4-Threshold of the CondEvent A4 is adjusted (reduced), based on the indication message, to reach the fourth threshold value. The fourth threshold value is a preset value or a value configured by the network device.

It is to be understood that the first CPC candidate cell, the second CPC candidate cell, and the third CPC candidate cell in the above is illustrative only. In practice, the first CPC candidate cell, the second CPC candidate cell, and the third CPC candidate cell may be a same candidate cell or different candidate cells.

In an operation 503, the terminal device performs evaluation and triggers the CPC based on the adjusted CPC execution condition.

Exemplarily, the UE performs evaluation and triggers the CPC based on the adjusted CPC execution condition.

In an operation 504, when the terminal device takes the first cell as the primary secondary cell (PSCell) and the network device does not configure the conditional PSCell change (CPC) for the terminal device, the terminal device deletes a secondary node (SN)/secondary cell group (SCG).

Exemplarily, for the UE in the connected state, when the UE takes the first cell as the PSCell and the network device does not configure the CPC for the UE, the UE deletes the SN/SCG.

In some embodiments, when the terminal device takes the first cell as the PSCell and the network device configures the CPC for the terminal device, and after the terminal device adjusts the CPC execution condition by performing the above method, the terminal device deletes the SN/SCG in response to none of the candidate cells satisfying the adjusted CPC condition.

In the present embodiment, the terminal device receives the indication message sent by the network device. When the terminal device takes the first cell as the primary secondary cell PSCell and the network device configures the conditional PSCell change CPC for the terminal device, the terminal device adjusts, based on the indication message, the CPC execution condition corresponding to each candidate cell in the CPC candidate-cell list. The terminal device performs evaluation and triggers the CPC based on the adjusted CPC execution condition. When the terminal device takes the first cell as the PSCell and the network device does not configure the CPC for the terminal device, the terminal device deletes the secondary site SN/secondary cell group (SCG). Based on the energy-saving strategy, the network device, in response to deciding to shut down the first cell, sends the indication message to the terminal device to indicate the terminal device that the network device will shut down the first cell. For the terminal device that takes the first cell as the PSCell, when the network device configures the CPC for the terminal device, the terminal device adjusts the CPC execution condition and performs evaluation and triggers the CPC based on the adjusted CPC execution condition. When the network device does not configure the CPC for the terminal device, the terminal device deletes the SN/CSG. That is, the UE that takes the first cell as the PSCell is triggered more quickly to change the PSCell or delete the SCG. On the one hand, the signaling overhead is reduced, and on the other hand, the delay of the terminal device in executing the above process is significantly shortened, such that the network device achieves energy saving.

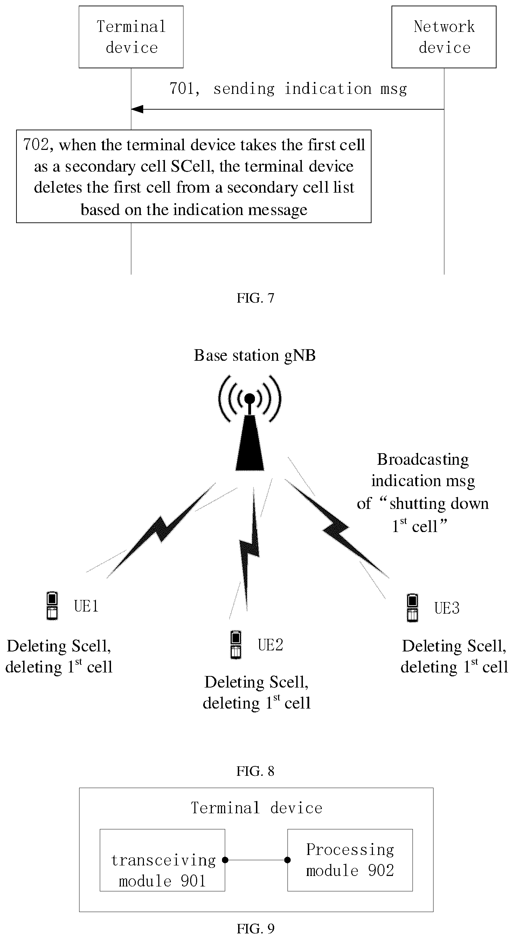

FIG. 7 is a flow chart of a method shutting down a cell according to an embodiment of the present disclosure. The method includes the following.

In an operation 701, the network device transmits the indication message to the terminal device, the indication message is configured to indicate that the network device will shut down the first cell.

The terminal device receives the indication message sent by the network device.

To be noted that the operation 701 is similar to the operation 301 in the embodiment described in FIG. 3 and will not be repeated here.

In an operation 702, when the terminal device takes the first cell as a secondary cell SCell, the terminal device deletes the first cell from a secondary cell list based on the indication message.

The operation of the terminal device deleting the first cell from the secondary cell list based on the indication message, may include the following.
(1) The terminal device, in response to receiving the indication message sent by the network device, deletes the first cell from the secondary cell list based on the indication message.
(2) The terminal device deletes, based on the indication message, the first cell from the secondary cell list at the time point when the network device shuts down the first cell.

Exemplarily, FIG. 8 is a schematic view of the terminal device taking the first cell as the SCell according to an embodiment of the present disclosure.

For the UE in the connected state, when the UE takes the first cell as the SCell, the UE deletes the SCell. That is, the UE deletes, in response to receiving the indication message indicating that the first cell is to be shut down, the first cell from a serving cell list/set. Specifically, the time point for deleting the SCell may be the following.

Method 1: The UE deletes the SCell immediately after receiving the indication message of shutting down the first cell.

Method 2: The UE, after receiving the indication message of shutting down the first cell, deletes the SCell at the time point which is indicated by the indication message for shutting down the first cell.

In the present embodiment, the terminal device receives the indication message sent by the network device. In the case where the terminal device takes the first cell as the SCell, the terminal device deletes the first cell from the secondary cell list based on the indication message. The network device sends, in response to deciding to shut down the first cell based on the energy-saving strategy, the indication message to the terminal device indicating that the network device will shut down the first cell. The UE that takes the first cell as the SCell deletes the SCell after receiving the indication message. That is, the UE that takes the first cell as the SCell may delete the SCell more quickly. On the one hand, the signaling overhead of the above process is reduced; and on the other hand, the delay of the UE in performing the above process is significantly reduced, such that the base station may save energy rapidly.

FIG. 9 is a schematic view of the terminal device according to an embodiment of the present disclosure. The terminal device includes the following.

A transceiving module 901 is configured to receive indication message sent from the network device. The indication message is configured to indicate that the network device will shut down a first cell.

In some embodiments, the indication message includes: the frequency point corresponding to the first cell and the physical cell identifier (PCI) of the first cell.

In some embodiments, the indication message further includes: the time point at which the network device shuts down the first cell.

In some embodiments, the time point at which the network device shuts down the first cell includes at least one of: the universal time coordinated (UTC) time and the system frame number (SFN) received by the terminal device.

In some embodiments, the terminal device further includes the following.

A processing module 902 is configured to adjust, based on the indication message, the CHO execution condition corresponding to each candidate cell in the CHO candidate-cell list, in response to the terminal device taking the first cell as the primary cell and the network device configuring the CHO for the terminal device.

In some embodiments, the CHO candidate-cell list includes the first CHO candidate cell. The CHO execution condition corresponding to the first CHO candidate cell includes the CHO event A3.

The processing module 902 is specifically configured to reduce, based on the indication message, the a3-Offset corresponding to the CHO event A3 to reach the first threshold value. The first threshold value is a preset value or a value configured by the network device.

The processing module 902 is specifically configured to reduce, based on the indication message, the channel quality measurement value of the primary cell to reach the first measurement value. The first measurement value is a preset value or a value configured by the network device.

In some embodiments, the CHO candidate-cell list includes the second CHO candidate cell. The CHO execution condition corresponding to the second CHO candidate cell includes the CHO event A5.

The processing module 902 is specifically configured to increase, based on the indication message, the a5-Threshold1 of the CHO event A5 to reach the second threshold value. The second threshold value is a preset value or a value configured by the network device.

The processing module 902 is specifically configured to reduce, based on the indication message, the a5-Threshold2 of the CHO event A5 to reach the third threshold value. The third threshold value is a preset value or a value configured by the network device.

The processing module 902 is specifically configured to reduce, based on the indication message, the channel quality measurement value of the primary cell to reach the second measurement value. The second measurement value is a preset value or a value configured by the network device.

In some embodiments, the CHO candidate-cell list includes the second CHO candidate cell. The CHO execution condition corresponding to the second CHO candidate cell includes the CHO event A5.

The processing module 902 is specifically configured to determines that the channel quality of the primary cell is always below the a5-Threshold 1 of the CHO event A5.

In some embodiments, the CHO candidate-cell list includes the third CHO candidate cell. The CHO execution condition corresponding to the third CHO candidate cell includes the CHO event A4.

The processing module 902 is specifically configured to reduce, based on the indication message, the a4-Threshold of the CHO event A4 to reach the fourth threshold value. The fourth threshold value is a preset value or a value configured by the network device.

In some embodiments, the terminal device further includes the following.

The processing module 902 is specifically configured to adjust, based on the indication message, the CPC execution condition corresponding to each candidate cell in the CPC candidate-cell list, in response to the terminal device taking the first cell as the primary secondary cell (PSCell) and the network device configuring the conditional PSCell change (CPC) for the terminal device.

In some embodiments, the CPC candidate-cell list includes the first CPC candidate cell, and the CPC execution condition corresponding to the first CPC candidate cell includes the CPC event A3.

The processing module 902 is specifically configured to reduce, based on the indication message, the a3-Offset corresponding to the CPC event A3 to reach the fifth threshold value. The fifth threshold value is a preset value or a value configured by the network device.

The processing module 902 is specifically configured to reduce, based on the indication message, the channel quality measurement value of the primary secondary cell to reach the third measurement value. The third measurement value is a preset value or a value configured by the network device.

In some embodiments, the CPC candidate-cell list includes the second CPC candidate cell. The CPC execution condition corresponding to the second CPC candidate cell includes the CPC event A5.

The processing module 902 is specifically configured to increase, based on the indication message, the a5-Threshold1 of the CPC event A5 to reach the sixth threshold value. The sixth threshold value is a preset value or a value configured by the network device.

The processing module 902 is specifically configured to reduce, based on the indication message, the a5-Threshold2 of the CPC event A5 to reach the seventh threshold value. The seventh threshold value is a preset value or a value configured by the network device.

The processing module 902 is specifically configured to reduce, based on the indication message, the channel quality measurement value of the primary secondary cell to reach the fourth measurement value. The fourth measurement value is a preset value or a value configured by the network device.

In some embodiments, the CPC candidate-cell list includes the second CPC candidate cell. The CPC execution condition corresponding to the second CPC candidate cell includes the CPC event A5.

The processing module 902 is specifically configured to determine that the channel quality of the primary secondary cell is always below the a5-Threshold 1 of the CPC event A5.

In some embodiments, the CPC candidate-cell list includes the third CPC candidate cell. The CPC execution condition corresponding to the third CPC candidate cell includes the CPC event A4.

The processing module 902 is specifically configured to delete the secondary node (SN)/secondary cell group (SCG) in response to the terminal device taking the first cell as the primary secondary cell (PSCell) and the network device not configuring the conditional PSCell change (CPC) for the terminal device.

In some embodiments, the terminal device further includes the following.

The processing module 902 is specifically configured to delete the first cell from a secondary cell list based on the indication message in response to the terminal device taking the first cell as the secondary cell SCell.

In some embodiments, the processing module 902 is specifically configured to delete the first cell from the secondary cell list based on the indication message in response to receiving the indication message sent by the network device.

Alternatively, the processing module 902 is specifically configured to delete, based on the indication message, the first cell from the secondary cell list at the time point when the network device shuts down the first cell.

In some embodiments, the indication message is carried in the master information block MIB or the system information block SIB.

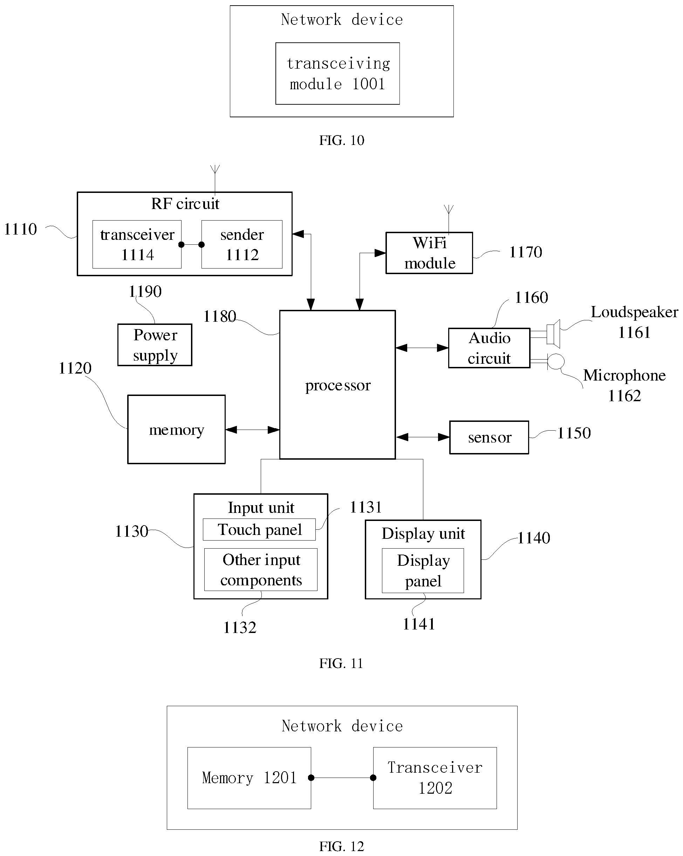

FIG. 10 is a schematic view of the network device according to an embodiment of the present disclosure. The network device includes the following.

A transceiving module 1001 is configured to send the indication message to the terminal device. The indication message is configured to indicate that the network device will shut down the first cell.

In some embodiments, the indication message includes: the frequency point corresponding to the first cell and the physical cell identifier (PCI) of the first cell.

In some embodiments, the indication message further includes: the time point at which the network device shuts down the first cell.

In some embodiments, the time point at which the network device shuts down the first cell includes at least one of: the universal time coordinated (UTC) time and the system frame number (SFN) received by the terminal device.

In some embodiments, the indication message is carried in the master information block MIB or the system information block SIB.

In some embodiments, the transceiving module 1001 is configured to send first configuration information to the terminal device. The first configuration information includes the CHO candidate-cell list and the CHO execution condition corresponding to each candidate cell in the CHO candidate-cell list.

In some embodiments, the transceiving module 1001 is configured to send second configuration information to the terminal device. The second configuration information includes the CPC candidate-cell list and a CPC execution condition corresponding to each candidate cell in the CPC candidate-cell list.

Corresponding to the method described in at least one of the above embodiments applied to the terminal device, the present disclosure also provides one or more terminal devices. The terminal device of the present disclosure may perform any implementation of the method described in the above. FIG. 11 is a schematic view of the terminal device according to another embodiment of the present disclosure. The terminal device is illustrated by taking a mobile phone as an example. The terminal device may include a radio frequency (RF) circuit 1110, a memory 1120, an input unit 1130, a display unit 1140, a sensor 1150, an audio circuit 1160, a wireless fidelity (WiFi) module 1170, a processor 1180, and a power supply 1190. The RF circuit 1110 includes a receiver 1114 and a transmitter 1112. Any ordinary skilled person in the art shall understand that the structure of the mobile phone illustrated in FIG. 11 does not limit the mobile phone, the mobile phone may include more or fewer components than illustrated or include a combination of certain components or a different arrangement of components.

Components of the mobile phone will be described in detail by referring to FIG. 11.

The RF circuit 1110 is configured to receive and transmit signals during sending and receiving messages or calls. In particular, the RF circuit 1110 receives downlink information sent from the base station and transfers the downlink information to the processor 1180 for processing; and transmits uplink data to the base station. Usually, the RF circuit 1110 includes, but is not limited to, an antenna, at least one amplifier, a transceiver, a coupler, a low noise amplifier (LNA), a duplexer, and so on. In addition, the RF circuit 1110 communicates with networks and other devices via wireless communication. The above wireless communication may be performed by using any communication standard or protocol, including but not limited to global system of mobile communication (GSM), general packet radio service (GPRS), code division multiple access (CDMA), wideband code division multiple access (WCDMA), long term evolution (LTE), e-mail, short message service (SMS) and so on.

The memory 1120 is configured to store software programs and modules. The processor 1180 executes various functional applications and processes data of the mobile phone by running the software programs and modules stored in the memory 1120. The memory 1120 may include a program storage area and a data storage area. The program storage area may store an operating system, applications required for at least one function (such as a sound playback function, an image displaying function, and so on). The data storage area may store data created while the mobile phone is in use (such as audio data, contact lists, and so on). In addition, the memory 1120 may include a high-speed random access memory and a non-volatile memory, such as at least one disk memory device, a flash memory device, or other volatile solid state memory devices.

The input unit 1130 is configured to receive incoming numeric or character information and generate key signal input related to user settings and function control of the mobile phone. Specifically, the input unit 1130 may include a touch panel 1131 and other input devices 1132. The touch panel 1131, also referred to as a touch screen, may collect touch operations performed by a user on or near the touch panel (such as operations performed by a finger, a stylus, or any other suitable object or accessory on or near the touch panel 1131). The touch panel 1131 may drive, based on a predetermined program, a corresponding connecting device. In some embodiments, the touch panel 1131 may include two parts: a touch detection component and a touch controller component. The touch detection component detects a touch orientation of the user and a signal brought about by the touch operation and transmits the signal to the touch controller component. The touch controller component receives touch information from the touch detection component, converts the touch information into contact coordinates, sends the contact coordinates to the processor 1180, receives commands sent from the processor 1180, and executes the commands. In addition, the touch panel 1131 may be achieved in various forms, including a resistance touch panel, a capacitive touch panel, an infrared touch panel, and a surface acoustic-wave touch panel. In addition to the touch panel 1131, the input unit 1130 can include other input components 1132. Specifically, the other input devices 1132 can include, but are not limited to, a physical keyboard, function keys (such as volume control buttons, on/off buttons, and so on), trackballs, mice, joystick, and the so on.

The display unit 1140 is configured to display information input by or provided to the user and various menus of the mobile phone. The display unit 1140 may include a display panel 1141. In some embodiments, the display panel 1141 may be configured as a liquid crystal display (LCD), an organic light-emitting diode (OLED), or the like. Further, the touch panel 1131 may cover the display panel 1141. When the touch panel 1131 detects the touch operation performed on or near the touch panel 1131, the touch panel 1131 transmits the touch operation to the processor 1180 to determine a type of touch event. The processor 1180 subsequently provides a corresponding visual output on the display panel 1141 based on the type of touch event. Although in FIG. 11, the touch panel 1131 and the display panel 1141 are shown as two separate components to implement the input and input functions of the mobile phone, in some embodiments, the touch panel 1131 may be integrated with the display panel 1141 to implement the input and output functions of the mobile phone.

The mobile phone may further include at least one sensor 1150, such as a light sensor, a motion sensor, and other sensors. Specifically, the light sensor may include an ambient light sensor and a proximity sensor. The ambient light sensor may adjust brightness of the display panel 1141 based on brightness of the environment. The proximity sensor may turn off the display panel 1141 and/or a backlight when the mobile phone is moved to the ear. As a kind of motion sensor, the accelerometer sensor can detect magnitude of acceleration in each direction (generally three axes), and the magnitude and the direction of gravity can be detected when the mobile phone is at rest. The accelerometer sensor can be used for the application of identifying postures of the mobile phone (such as horizontal and vertical screen switching, related games, magnetometer posture calibration), functions related to vibration identification (such as pedometer, tapping), and so on. The mobile phone may further be configured with a gyroscope, a barometer, a humidity meter, a thermometer, an infrared sensor and other sensors, which will not be described in detail here.

The audio circuit 1160, the loudspeaker 1161, and the microphone 1162 may provide an audio interface between the user and the mobile phone. The audio circuit 1160 may convert received audio data into electrical signals and transmit the electrical signals to the loudspeaker 1161. The loudspeaker 1161 converts the electrical signals into sound signals to be output. On the other hand, the microphone 1162 converts the collected sound signals into electrical signals. The audio circuit 1160 receives the electrical signals converts the electrical signals into audio data, outputs the audio data to the processor 1180 for processing. The processed audio data is transmitted through the RF circuit 1110 to, such as, another mobile phone, or the audio data is output to the memory 1120 for further processing.

WiFi is a short-range wireless transmission technology. The mobile phone may assist, through the WiFi module 1170, the user in sending and receiving e-mails, browsing the website and accessing streaming media, and so on. The WiFi module 1170 provides the user with wireless broadband Internet access. Although the WiFi module 1170 is illustrated in FIG. 11, it is understood that the WiFi module 1170 is not a mandatory constituent of the mobile phone and can be omitted entirely as required, as long as the essence of the present disclosure is not modified.

The processor 1180 is the control center of the mobile phone, connecting various parts of the entire mobile phone using various interfaces and lines, performing various functions and processing data of the mobile phone by running or executing software programs and/or modules stored in the memory 1120, and invoking data stored in the memory 1120, such that the processor 1180 monitors the mobile phone as a whole. In some embodiments, the processor 1180 may include one or more processing units. The processor 1180 may integrate an application processor and a modem processor. The application processor mainly handles the operating system, the user interface, the application programs, and so on. The modem processor mainly handles wireless communication. It is understood that the modem processor described above may not be integrated into the processor 1180.

The mobile phone also includes the power supply 1190 (such as a battery) that supplies power for the various components, and preferably, the power supply may be logically connected to the processor 1180 via a power management system, such that functions such as charging management, discharging management, and power consumption management can be achieved via the power management system. Although not shown, the mobile phone may further include a camera, a Bluetooth module, and so on, which will not be discussed herein.

In the present embodiment, the RF circuit 1110 is configured to receive the indication message sent from the network device. The indication message is configured to indicate that the network device will shut down a first cell.

In some embodiments, the indication message includes: the frequency point corresponding to the first cell and the physical cell identifier (PCI) of the first cell.

In some embodiments, the indication message further includes: the time point at which the network device shuts down the first cell.

In some embodiments, the time point at which the network device shuts down the first cell includes at least one of: the universal time coordinated (UTC) time and the system frame number (SFN) received by the terminal device.

In some embodiments, the processor 1180 is configured to: adjust, based on the indication message, the CHO execution condition corresponding to each candidate cell in the CHO candidate-cell list, in response to the terminal device taking the first cell as the primary cell and the network device configuring the CHO for the terminal device; and perform evaluation of trigger CHO based on the adjusted CHO execution condition.

In some embodiments, the CHO candidate-cell list includes the first CHO candidate cell. The CHO execution condition corresponding to the first CHO candidate cell includes the CHO event A3.

The processor 1180 is specifically configured to reduce, based on the indication message, the a3-Offset corresponding to the CHO event A3 to reach the first threshold value. The first threshold value is a preset value or a value configured by the network device.

The processor 1180 is specifically configured to reduce, based on the indication message, the channel quality measurement value of the primary cell to reach the first measurement value. The first measurement value is a preset value or a value configured by the network device.

In some embodiments, the CHO candidate-cell list includes the second CHO candidate cell. The CHO execution condition corresponding to the second CHO candidate cell includes the CHO event A5.

The processor 1180 is specifically configured to increase, based on the indication message, the a5-Threshold1 of the CHO event A5 to reach the second threshold value. The second threshold value is a preset value or a value configured by the network device.

The processor 1180 is specifically configured to reduce, based on the indication message, the a5-Threshold2 of the CHO event A5 to reach the third threshold value. The third threshold value is a preset value or a value configured by the network device.

The processor 1180 is specifically configured to reduce, based on the indication message, the channel quality measurement value of the primary cell to reach the second measurement value. The second measurement value is a preset value or a value configured by the network device.

In some embodiments, the CHO candidate-cell list includes the second CHO candidate cell. The CHO execution condition corresponding to the second CHO candidate cell includes the CHO event A5.

The processor 1180 is specifically configured to determines that the channel quality of the primary cell is always below the a5-Threshold 1 of the CHO event A5.

In some embodiments, the CHO candidate-cell list includes the third CHO candidate cell. The CHO execution condition corresponding to the third CHO candidate cell includes the CHO event A4.

The processor 1180 is specifically configured to reduce, based on the indication message, the a4-Threshold of the CHO event A4 to reach the fourth threshold value. The fourth threshold value is a preset value or a value configured by the network device.

In some embodiments, the terminal device further includes the following.

The processor 1180 is specifically configured to: adjust, based on the indication message, the CPC execution condition corresponding to each candidate cell in the CPC candidate-cell list, in response to the terminal device taking the first cell as the primary secondary cell (PSCell) and the network device configuring the conditional PSCell change (CPC) for the terminal device; and performs evaluation and triggers the CPC based on the adjusted CPC execution condition.

In some embodiments, the CPC candidate-cell list includes the first CPC candidate cell, and the CPC execution condition corresponding to the first CPC candidate cell includes the CPC event A3.

The processor 1180 is specifically configured to reduce, based on the indication message, the a3-Offset corresponding to the CPC event A3 to reach the fifth threshold value. The fifth threshold value is a preset value or a value configured by the network device.

The processor 1180 is specifically configured to reduce, based on the indication message, the channel quality measurement value of the primary secondary cell to reach the third measurement value. The third measurement value is a preset value or a value configured by the network device.

In some embodiments, the CPC candidate-cell list includes the second CPC candidate cell. The CPC execution condition corresponding to the second CPC candidate cell includes the CPC event A5.

The processor 1180 is specifically configured to increase, based on the indication message, the a5-Threshold1 of the CPC event A5 to reach the sixth threshold value. The sixth threshold value is a preset value or a value configured by the network device.

The processor 1180 is specifically configured to reduce, based on the indication message, the a5-Threshold2 of the CPC event A5 to reach the seventh threshold value. The seventh threshold value is a preset value or a value configured by the network device.

The processor 1180 is specifically configured to reduce, based on the indication message, the channel quality measurement value of the primary secondary cell to reach the fourth measurement value. The fourth measurement value is a preset value or a value configured by the network device.

In some embodiments, the CPC candidate-cell list includes the second CPC candidate cell. The CPC execution condition corresponding to the second CPC candidate cell includes the CPC event A5.

The processor 1180 is specifically configured to determine that the channel quality of the primary secondary cell is always below the a5- Threshold 1 of the CPC event A5.

In some embodiments, the CPC candidate-cell list includes the third CPC candidate cell. The CPC execution condition corresponding to the third CPC candidate cell includes the CPC event A4.

The processor 1180 is specifically configured to reduce, based on the indication message, the a4-Threshold of the CPC event A4 to reach the eighth threshold value. The eighth threshold value is a preset value or a value configured by the network device.

The processor 1180 is specifically configured to delete the secondary node (SN)/secondary cell group (SCG) in response to the terminal device taking the first cell as the primary secondary cell (PSCell) and the network device not configuring the conditional PSCell change (CPC) for the terminal device.

The processor 1180 is specifically configured to delete the first cell the secondary cell list based on the indication message in response to the terminal device taking the first cell as the secondary cell SCell.

In some embodiments, the processor 1180 is specifically configured to delete the first cell from the secondary cell list based on the indication message in response to receiving the indication message sent by the network device.

Alternatively, the processor 1180 is specifically configured to delete, based on the indication message, the first cell from the secondary cell list at the time point when the network device shuts down the first cell.

In some embodiments, the indication message is carried in the master information block MIB or the system information block SIB.

FIG. 12 is a schematic view of the network device according to another embodiment of the present disclosure. The network device may include the following.

A memory 1201 stores executable program codes.

A transceiver 1202 is coupled to the memory 1201.

A transceiver 1202 is configured to send the indication message to the terminal device. The indication message is configured to indicate that the network device will shut down the first cell.

In some embodiments, the indication message includes: the frequency point corresponding to the first cell and the physical cell identifier (PCI) of the first cell.

In some embodiments, the indication message further includes: the time point at which the network device shuts down the first cell.

In some embodiments, the time point at which the network device shuts down the first cell includes at least one of: the universal time coordinated (UTC) time and the system frame number (SFN) received by the terminal device.

In some embodiments, the indication message is carried in the master information block MIB or the system information block SIB.

In some embodiments, the transceiver 1202 is configured to send first configuration information to the terminal device. The first configuration information includes the CHO candidate-cell list and the CHO execution condition corresponding to each candidate cell in the CHO candidate-cell list.

In some embodiments, the transceiver 1202 is configured to send second configuration information to the terminal device. The second configuration information includes the CPC candidate-cell list and a CPC execution condition corresponding to each candidate cell in the CPC candidate-cell list.

The above embodiments may be implemented as a whole or in part by software, hardware, firmware, or any combination thereof. When implemented using software, the above embodiments may be implemented wholly or partly in the form of a computer program product. The computer program product includes one or more computer instructions. Loading and executing the computer program instructions on a computer produces, in whole or in part, a process or function in accordance with the embodiments of the present invention. The computer may be a general purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted by wires (such as a coaxial cable, fibre optic, a digital subscriber line (DSL)) or wirelessly (such as through infrared, wireless, microwave, and so on) from a website, a computer, a server, or a data center to another website, another computer, another server or another data center. The computer-readable storage medium may be any usable medium that a computer is capable of storing or a data storage device such as a server or a data center that is integrated with one or more usable media. The usable medium may be a magnetic medium, (such as a floppy disk, a hard drive, a tape), an optical medium (such as a DVD), or a semiconductor medium (such as a solid state disk Solid State Disk (SSD)), and the like.

The terms "first", "second", "third", "fourth", and so on (if any) in the specification and claims of the present disclosure and the accompanying drawings described above are used to distinguish similar objects and are not intended to describe a particular order or sequence. It should be understood that the data described by the terms may be interchangeable where appropriate, such that the embodiments described herein can be implemented in an order other than what is illustrated or described herein. In addition, the terms "comprising", "having", and any variations thereof, are intended to cover non-exclusive embodiments. For example, a process, a method, a system, a product, or an apparatus comprising a series of operations or units is not limited to those listed features, but rather includes other features that are not listed or inherently included in the process, the method, the system, the product, or the apparatus.

## Claims

1. A method of shutting down a cell, comprising:
receiving, by a terminal device, an indication message sent from a network device, wherein the indication message is configured to indicate that the network device will shut down a first cell.

2. The method according to claim 1, wherein the indication message comprises: a frequency point corresponding to the first cell and a physical cell identifier (PCI) of the first cell.

3. The method according to claim 1 or 2, wherein, the indication message further comprises: a time point at which the network device shuts down the first cell.

4. The method according to claim 3, wherein, the time point at which the network device shuts down the first cell comprises at least one of: a universal time coordinated (UTC) time and a system frame number (SFN) received by the terminal device.

5. The method according to any one of claims 1 to 4, further comprising:
adjusting, by the terminal device based on the indication message, a conditional handover (CHO) execution condition corresponding to each candidate cell in a CHO candidate-cell list, in response to the terminal device taking the first cell as a primary cell and the network device configuring the CHO for the terminal device;
performing, by the terminal device, evaluation and triggering the CHO based on the adjusted CHO execution condition.

6. The method according to claim 5, wherein, the CHO candidate-cell list comprises a first CHO candidate cell, a CHO execution condition corresponding to the first CHO candidate cell comprises a CHO event A3; and the adjusting a CHO execution condition corresponding to each candidate cell in the CHO candidate-cell list, comprises:
reducing, by the terminal device based on the indication message, an a3-Offset corresponding to the CHO event A3 to reach a first threshold value, wherein the first threshold value is a preset value or a value configured by the network device; and/or
reducing, by the terminal device based on the indication message, a channel quality measurement value of the primary cell to reach a first measurement value, wherein the first measurement value is a preset value or a value configured by the network device.

7. The method according to claim 5, wherein the CHO candidate-cell list comprises a second CHO candidate cell, a CHO execution condition corresponding to the second CHO candidate cell comprises a CHO event A5; and the adjusting a CHO execution condition corresponding to each candidate cell in the CHO candidate-cell list, comprises:
increasing, by the terminal device based on the indication message, an a5-Threshold1 of the CHO event A5 to reach a second threshold value, wherein the second threshold value is a preset value or a value configured by the network device; and/or
reducing, by the terminal device based on the indication message, the a5-Threshold2 of the CHO event A5 to reach a third threshold value, wherein the third threshold value is a preset value or a value configured by the network device; and/or
reducing, by the terminal device based on the indication message, a channel quality measurement value of the primary cell to reach a second measurement value, wherein the second measurement value is a preset value or a value configured by the network device.

8. The method according to claim 5, wherein the CHO candidate-cell list comprises a second CHO candidate cell, a CHO execution condition corresponding to the second CHO candidate cell comprises a CHO event A5; and the method further comprises:
determining, by the terminal device, that channel quality of the primary cell is always below an a5-Threshold1 of the CHO event A5.

9. The method according to claim 5, wherein the CHO candidate-cell list comprises a third CHO candidate cell, a CHO execution condition corresponding to the third CHO candidate cell comprises a CHO event A4; and the adjusting a CHO execution condition corresponding to each candidate cell in the CHO candidate-cell list, comprises:
reducing, by the terminal device based on the indication message, an a4-Threshold of the CHO event A4 to reach a fourth threshold value, wherein the fourth threshold value is a preset value or a value configured by the network device.

10. The method according to any one of claims 1 to 4, further comprising:
adjusting, by the terminal device based on the indication message, a conditional PSCell change (CPC) execution condition corresponding to each candidate cell in a CPC candidate-cell list, in response to the terminal device taking the first cell as a primary secondary cell (PSCell) and the network device configuring the conditional PSCell change (CPC) for the terminal device; and
performing, by the terminal device, evaluation and triggering the CPC based on the adjusted CPC execution condition.

11. The method according to claim 10, wherein, the CPC candidate-cell list comprises a first CPC candidate cell, a CPC execution condition corresponding to the first CPC candidate cell comprises a CPC event A3; and the adjusting a conditional PSCell change (CPC) execution condition corresponding to each candidate cell in a CPC candidate-cell list, comprises:
reducing, by the terminal device based on the indication message, an a3-Offset corresponding to the CPC event A3 to reach a fifth threshold value, wherein the fifth threshold value is a preset value or a value configured by the network device; and/or
reducing, by the terminal device based on the indication message, a channel quality measurement value of the primary secondary cell to reach a third measurement value, wherein the third measurement value is a preset value or a value configured by the network device.

12. The method according to claim 10, wherein, the CPC candidate-cell list comprises a second CPC candidate cell, a CPC execution condition corresponding to the second CPC candidate cell comprises a CPC event A5; and the adjusting a conditional PSCell change (CPC) execution condition corresponding to each candidate cell in a CPC candidate-cell list, comprises:
increasing, by the terminal device based on the indication message, an a5-Threshold1 of the CPC event A5 to reach a sixth threshold value, wherein the sixth threshold value is a preset value or a value configured by the network device; and/or
reducing, by the terminal device based on the indication message, an a5-Threshold2 of the CPC event A5 to reach a seventh threshold value, wherein the seventh threshold value is a preset value or a value configured by the network device; and/or
reducing, by the terminal device based on the indication message, a channel quality measurement value of the primary secondary cell to reach a fourth measurement value, wherein the fourth measurement value is a preset value or a value configured by the network device.

13. The method according to claim 10, wherein the CPC candidate-cell list comprises a second CPC candidate cell, a CPC execution condition corresponding to the second CPC candidate cell comprises a CPC event A5; and the method further comprises:
determining, by the terminal device, that a channel quality of the primary secondary cell is always below an a5-Threshold1 of the CPC event A5.

14. The method according to claim 10, wherein the CPC candidate-cell list comprises a third CPC candidate cell, a CPC execution condition corresponding to the third CPC candidate cell comprises a CPC event A4; and the adjusting a conditional PSCell change (CPC) execution condition corresponding to each candidate cell in a CPC candidate-cell list, comprises:
reducing, by the terminal device based on the indication message, an a4-Threshold of the CPC event A4 to reach an eighth threshold value, wherein the eighth threshold value is a preset value or a value configured by the network device.

15. The method according to any one of claims 10 to 14, further comprising:
deleting, by the terminal device, a secondary node (SN)/secondary cell group (SCG) in response to the terminal device taking the first cell as the primary secondary cell (PSCell) and the network device not configuring the conditional PSCell change (CPC) for the terminal device.

16. The method according to any one of claims 1 to 4, further comprising:
deleting, by the terminal device, the first cell from a secondary cell list based on the indication message in response to the terminal device taking the first cell as a secondary cell (SCell).

17. The method according to claim 16, wherein the deleting the first cell from a secondary cell list based on the indication message, comprises:
deleting, by the terminal device in response to receiving the indication message sent by the network device, the first cell from the secondary cell list based on the indication message; or
deleting, based on the indication message, the first cell from the secondary cell list at the time point when the network device shuts down the first cell.

18. The method according to any one of claims 1 to 17, wherein the indication message is carried in a master information block (MIB) or a system information block (SIB).

19. A method of shutting down a cell, comprising:
sending, by a network device, an indication message to a terminal device, wherein the indication message is configured to indicate that the network device will shut down a first cell.

20. The method according to claim 19, wherein the indication message comprises: a frequency point corresponding to the first cell and a physical cell identifier (PCI) of the first cell.

21. The method according to claim 19 or 20, wherein the indication message further comprises: a time point at which the network device shuts down the first cell.

22. The method according to claim 21, wherein the time point at which the network device shuts down the first cell comprises at least one of: a universal time coordinated (UTC) time and a system frame number (SFN) received by the terminal device.

23. The method according to any one of claims 19 to 22, wherein the indication message is carried in a master information block MIB or a system information block SIB.

24. The method according to any one of claims 19 to 23, further comprising:
sending, by the network device, first configuration information to the terminal device, wherein the first configuration information comprises a CHO candidate-cell list and a CHO execution condition corresponding to each candidate cell in the CHO candidate-cell list.

25. The method according to any one of claims 19 to 24, further comprising:
sending, by the network device, second configuration information to the terminal device, wherein the second configuration information comprises a CPC candidate-cell list and a CPC execution condition corresponding to each candidate cell in the CPC candidate-cell list.

26. A terminal device, comprising:
a memory, storing executable program codes; and
a transceiver, coupled to the memory;
wherein the transceiver is configured to receive an indication message sent from a network device, wherein the indication message is configured to indicate that the network device will shut down a first cell.

27. The terminal device according to claim 26, wherein, the indication message comprises: a frequency point corresponding to the first cell and a physical cell identifier (PCI) of the first cell.

28. The terminal device according to claim 26 or 27, wherein the indication message further comprises: a time point at which the network device shuts down the first cell.

29. The terminal device according to claim 28, wherein the time point at which the network device shuts down the first cell comprises at least one of: a universal time coordinated (UTC) time and a system frame number (SFN) received by the terminal device.

30. The terminal device according to any one of claims 26 to 29, further comprising a processor, configured to:
adjust, based on the indication message, a conditional handover (CHO) execution condition corresponding to each candidate cell in a CHO candidate-cell list, in response to the terminal device taking the first cell as a primary cell and the network device configuring the CHO for the terminal device; and
perform evaluation and triggering the CHO based on the adjusted CHO execution condition.

31. The terminal device according to claim 30, wherein the CHO candidate-cell list comprises a first CHO candidate cell, a CHO execution condition corresponding to the first CHO candidate cell comprises a CHO event A3;
the processor is configured to reduce, based on the indication message, an a3-Offset corresponding to the CHO event A3 to reach a first threshold value, wherein the first threshold value is a preset value or a value configured by the network device; and/or
the processor is configured to reduce, based on the indication message, a channel quality measurement value of the primary cell to reach a first measurement value, wherein the first measurement value is a preset value or a value configured by the network device.

32. The terminal device according to claim 30, wherein the CHO candidate-cell list comprises a second CHO candidate cell, a CHO execution condition corresponding to the second CHO candidate cell comprises a CHO event A5;
the processor is configured to increase, based on the indication message, an a5-Threshold1 of the CHO event A5 to reach a second threshold value, wherein the second threshold value is a preset value or a value configured by the network device; and/or
the processor is configured to reduce, based on the indication message, the a5-Threshold2 of the CHO event A5 to reach a third threshold value, wherein the third threshold value is a preset value or a value configured by the network device; and/or
the processor is configured to reduce, based on the indication message, a channel quality measurement value of the primary cell to reach a second measurement value, wherein the second measurement value is a preset value or a value configured by the network device.

33. The terminal device according to claim 30, wherein the CHO candidate-cell list comprises a second CHO candidate cell, a CHO execution condition corresponding to the second CHO candidate cell comprises a CHO event A5; and
the processor is configured to determine that channel quality of the primary cell is always below an a5-Threshold1 of the CHO event A5.

34. The terminal device according to claim 30, wherein the CHO candidate-cell list comprises a third CHO candidate cell, a CHO execution condition corresponding to the third CHO candidate cell comprises a CHO event A4; and
the processor is configured to reduce, based on the indication message, an a4-Threshold of the CHO event A4 to reach a fourth threshold value, wherein the fourth threshold value is a preset value or a value configured by the network device.

35. The terminal device according to any one of claims 26 to 29, wherein the processor is configured to:
adjust, based on the indication message, a conditional PSCell change (CPC) execution condition corresponding to each candidate cell in a CPC candidate-cell list, in response to the terminal device taking the first cell as a primary secondary cell (PSCell) and the network device configuring the conditional PSCell change (CPC) for the terminal device; and
perform evaluation and trigger the CPC based on the adjusted CPC execution condition.

36. The terminal device according to claim 35, wherein the CPC candidate-cell list comprises a first CPC candidate cell, a CPC execution condition corresponding to the first CPC candidate cell comprises a CPC event A3; and
the processor is configured to reduce, based on the indication message, an a3-Offset corresponding to the CPC event A3 to reach a fifth threshold value, wherein the fifth threshold value is a preset value or a value configured by the network device; and/or
the processor is configured to reduce, based on the indication message, a channel quality measurement value of the primary secondary cell to reach a third measurement value, wherein the third measurement value is a preset value or a value configured by the network device.

37. The terminal device according to claim 35, wherein the CPC candidate-cell list comprises a second CPC candidate cell, a CPC execution condition corresponding to the second CPC candidate cell comprises a CPC event A5; and
the processor is configured to increase, based on the indication message, an a5-Threshold1 of the CPC event A5 to reach a sixth threshold value, wherein the sixth threshold value is a preset value or a value configured by the network device; and/or
the processor is configured to reduce, based on the indication message, an a5-Threshold2 of the CPC event A5 to reach a seventh threshold value, wherein the seventh threshold value is a preset value or a value configured by the network device; and/or
the processor is configured to reduce, based on the indication message, a channel quality measurement value of the primary secondary cell to reach a fourth measurement value, wherein the fourth measurement value is a preset value or a value configured by the network device.

38. The terminal device according to claim 35, wherein the CPC candidate-cell list comprises a second CPC candidate cell, a CPC execution condition corresponding to the second CPC candidate cell comprises a CPC event A5; and
the processor is further configured to determine that a channel quality of the primary secondary cell is always below an a5-Threshold 1 of the CPC event A5.

39. The terminal device according to claim 35, wherein the CPC candidate-cell list comprises a third CPC candidate cell, a CPC execution condition corresponding to the third CPC candidate cell comprises a CPC event A4; and
the processor is further configured to reduce, based on the indication message, an a4-Threshold of the CPC event A4 to reach an eighth threshold value, wherein the eighth threshold value is a preset value or a value configured by the network device.

40. The terminal device according to any one of claims 35 to 39, wherein, the processor is further configured to delete a secondary node (SN)/secondary cell group (SCG) in response to the terminal device taking the first cell as the primary secondary cell (PSCell) and the network device not configuring the conditional PSCell change (CPC) for the terminal device.

41. The terminal device according to any one of claims 26 to 29, wherein the processor is further configured to delete the first cell from a secondary cell list based on the indication message in response to the terminal device taking the first cell as a secondary cell (SCell).

42. The terminal device according to claim 41, wherein the processor is configured to:
delete, in response to the terminal device receiving the indication message sent by the network device, the first cell from the secondary cell list based on the indication message; or
delete, based on the indication message, the first cell from the secondary cell list at the time point when the network device shuts down the first cell.

43. The terminal device according to any one of claims 26 to 42, wherein the indication message is carried in a master information block (MIB) or a system information block (SIB).

44. A network device, comprising:
a memory, storing executable program codes; and
a transceiver, coupled to the memory;
wherein the transceiver is configured to send an indication message to a terminal device, wherein the indication message is configured to indicate that the network device will shut down a first cell.

45. The network device according to claim 44, wherein the indication message comprises: a frequency point corresponding to the first cell and a physical cell identifier (PCI) of the first cell.

46. The network device according to claim 44 or 45, wherein the indication message further comprises: a time point at which the network device shuts down the first cell.

47. The network device according to claim 46, wherein the time point at which the network device shuts down the first cell comprises at least one of: a universal time coordinated (UTC) time and a system frame number (SFN) received by the terminal device.

48. The network device according to any one of claims 44 to 47, wherein the indication message is carried in a master information block MIB or a system information block SIB.

49. The network device according to any one of claims 44 to 48, wherein the transceiver is configured to send first configuration information to the terminal device, wherein the first configuration information comprises a CHO candidate-cell list and a CHO execution condition corresponding to each candidate cell in the CHO candidate-cell list.

50. The network device according to any one of claims 44 to 49, wherein the transceiver is configured to send second configuration information to the terminal device, wherein the second configuration information comprises a CPC candidate-cell list and a CPC execution condition corresponding to each candidate cell in the CPC candidate-cell list.

51. A terminal device, comprising:
a transceiving module, configured to receive an indication message sent from a network device, wherein the indication message is configured to indicate that the network device will shut down a first cell.

52. A network device, comprising:
a transceiving module, configured to send an indication message to a terminal device, wherein the indication message is configured to indicate that the network device will shut down a first cell.

53. A computer-readable storage medium, comprising instructions, wherein the instructions are configured to, when being run on a processor, enable the processor to perform the method according to any one of claims 1 to 18 or the method according to any one of claims 19 to 25.
